# EUROPÄISCHE PATENTSCHRIFT

(11) **EP 0 545 004 B1**
(45) Veröffentlichungstag und Bekanntmachung des Hinweises auf die Patenterteilung: **06.03.1996**
(21) Anmeldenummer: 92115045.4
(22) Anmeldetag: 03.09.1992
(51) Int. Cl.: B41F 13/00, F16D 11/14, B41F 13/008

(54) **Antrieb für Rotationsdruckmaschinen**
Driving device for rotary printing machines
Entraînement pour rotatives

(30) Priorität: 09.10.1991 US 774069
(43) Veröffentlichungstag der Anmeldung: 09.06.1993
(73) Patentinhaber: Heidelberger Druckmaschinen Aktiengesellschaft, D-69115 Heidelberg (DE)
(72) Erfinder: Dawley, Douglas J., Lee, 03824 NH (US); Gentle, Brian J., Rochester, 03867 NH (US)
(74) Vertreter: Stoltenberg, Baldo Heinz-Herbert

(56) Entgegenhaltungen:
- DE-B- 2 854 032
- DE-U- 8 813 126
- FR-A- 671 200
- FR-A- 2 635 553
- PATENT ABSTRACTS OF JAPAN, Band 7, Nr. 165 (M-230)(1310), 20. Juli 1983;& JP-A-58 072 756 (HONDA GIKEN KOGYO K.K.) 30-04-1983
- PATENT ABSTRACTS OF JAPAN, Band 10, Nr. 138 (M-480)(2195), 21. Mai 1986; & JP-A-60 260 759 (FUJI XEROX K.K.) 23-12-1985

## Beschreibung

Die Erfindung betrifft einen Antrieb für Rotationsdruckmaschinen mit einer Kupplung zum Kuppeln von Getrieben oder übersetzungsgetrieben in einer vorbestimmten Phasenlage.

DE 28 54 032 C3 zeigt eine Antriebsvorrichtung für Rotationsdruckmaschinen mit einem zusätzlichen Getriebe zum Zwecke des Kuppelns in einer vorbestimmten Phasenlage. Zum Kuppeln selbst wird eine Zahnscheibe benutzt, die über eine Magnetkupplung gesteuert wird und in vielen Positionen einkuppelbar ist. Diese bekannte Bauart ist nicht ausfallsicher und erfordert einen erheblichen Aufwand in konstruktiver und finanzieller Hinsicht und verteuert somit den Antrieb beträchtlich.

Es ist die Aufgabe der vorliegenden Erfindung, einen Antrieb für eine Rotationsdruckmaschine mit einer Kupplung zu versehen, die ausfallsicher ist und ein phasengleiches Einkuppeln und eine präzise Kraftübertragung auf relativ einfache Weise gewährleistet.

Die Aufgabe wird erfindungsgemäß dadurch gelöst, daß für eine Rotationsdruckmaschine ein Antrieb mit einer Kupplung zum Verbinden zweier Getriebe in einer gegebenen Phasenlage vorgesehen ist, wobei die Kupplung aus zwei Kupplungshälften besteht, an deren jeweiliger Stirnseite sich ergänzende Kupplungselemente zur Längsachse exzentrisch versetzt angeordnet sind und beide Kupplungselemente mit jeweiligen radial angebrachten, miteinander verbindbaren Zentrierflächen versehen sind, und die Zentrierflächen aus dem gekuppelten Zustand, in welchem die Zentrierflächen miteinander verbunden sind, in einen entkuppelten Zustand, in welchem die Zentrierflächen ausfallsicher entkuppelt und die beiden Getriebe vollkommen voneinander getrennt sind, kuppelbar sind.

Eine Kupplung der hieroben beschriebenen, erfindungsgemäßen Konstruktion erfordert geringe Herstellungskosten und gewährleistet eine hohe Kupplungsgenauigkeit. Diese Kupplung ermöglicht ein phasengleiches Kuppeln über einfache Positionsanzeiger und Stellelemente, so daß in einem verbundenen oder gekuppelten Zustand die Antriebskräfte mit sehr großer Rundlaufgenauigkeit übertragen werden können.

In einer anderen Ausgestaltung der Erfindung besteht das Kupplungselement der einen Kupplungshälfte aus einem zur Längsachse exzentrisch darauf angebrachtem Querstück und das Kupplungselement der anderen Kupplungshälfte aus einer darin geformten, dem Querstück angepaßten Nut, wobei die Zentrierfläche der einen Kupplungshälfte als kegelförmige Zentrierbüchse und die Zentrierfläche der anderen Kupplungshälfte als kegelförmige Zentrierbohrung in der Kupplungshälfte ausgebildet sind.

Ein Antrieb mit einer derartig ausgebildeten Kupplung ermöglicht die Übertragung hoher Antriebskräfte mit sehr großer Rundlaufgenauigkeit.

Weitere, die Erfindung kennzeichnende Merkmale sind in den anhängenden Patentansprüchen enthalten.

Anhand der beigefügten, nachstehend beschriebenen Zeichnungen wird ein Ausführungsbeispiel der Erfindung im folgenden näher erläutert:
- Fig. 1: ist ein Längsschnitt eines Antriebs, welcher Gegenstand vorliegender Erfindung ist;
- Fig. 2: ist eine Teilansicht der Fig. 1, welche die erfindungsgemäße Kupplung aufweist;
- Fig. 3: ist eine teilweise Vorderansicht der Fig. 2, welche die eine, um 90° gegen den Uhrzeigersinn gedrehte Kupplungshälfte aufweist;
- Fig. 4: ist eine teilweise Draufsicht der Fig. 3;
- Fig. 5: ist eine Teilansicht der Fig. 2, welche die andere, um 90° im Uhrzeigersinn gedrehte Kupplungshälfte aufweist; und
- Fig. 6: ist eine Draufsicht der Fig. 5.

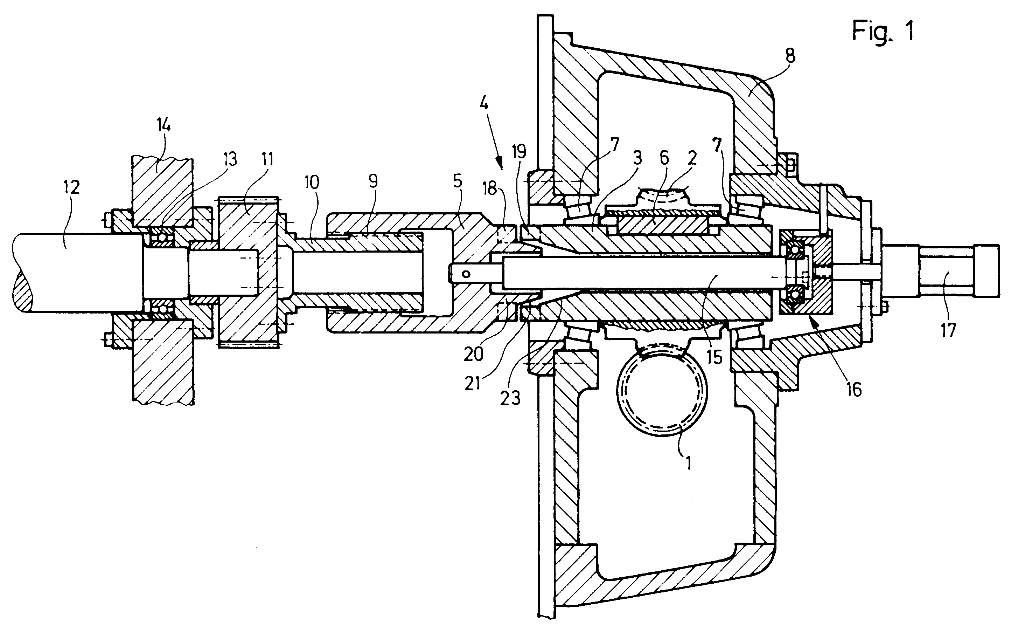

In Fig. 1 ist ein Antrieb für eine Rotationsdruckmaschine gezeigt, durch welchen Antriebskräfte auf die eine Kupplungshälfte 3 einer ganzen Kupplung 4 über zwei zusammenwirkende Schraubenräder 1 und 2 übertragen wird. Die andere Kupplungshälfte 5 ist in Fig. 1 in einem entkuppelten Zustand gezeigt. Die erste Kupplungshälfte 3 ist mit dem Schraubenrad 2 verbunden und über Wälzlager 7 in einem Gehäuse 8 gelagert.

Die andere Kupplungshälfte 5 ist beispielsweise über eine Schiebekeilverbindung 9 auf einer Büchse 10 verschiebbar gelagert. In dem gezeigten Ausführungsbeispiel ist die Büchse 10 an einem Zahnrad 11 befestigt, das auf einem Achszapfen eines Zylinders gelagert ist. Der Achszapfen 12 ist wiederum über ein Wälzlager 13 in einem Gestellteil 14 gelagert.

Zum Zwecke des Ein- und Entkuppelns der Kupplung 4 wird die Kupplungshälfte 5 über einen Zapfen 15, eine Drehverbindung 16 und ein Stellmittel 17 auf der Schiebekeilverbindung 9 axial verschoben. Beide Kupplungshälften 3 und 5 können somit durch nicht dargestellte herkömmliche Winkelimpulsgeber oder Drehstellungsanzeiger verbunden werden, wodurch die Einkupplung der Kupplung 4 zu einem gegebenen Zeitpunkt erfolgen kann, falls dies für den Betrieb der Maschine nötig werden sollte.

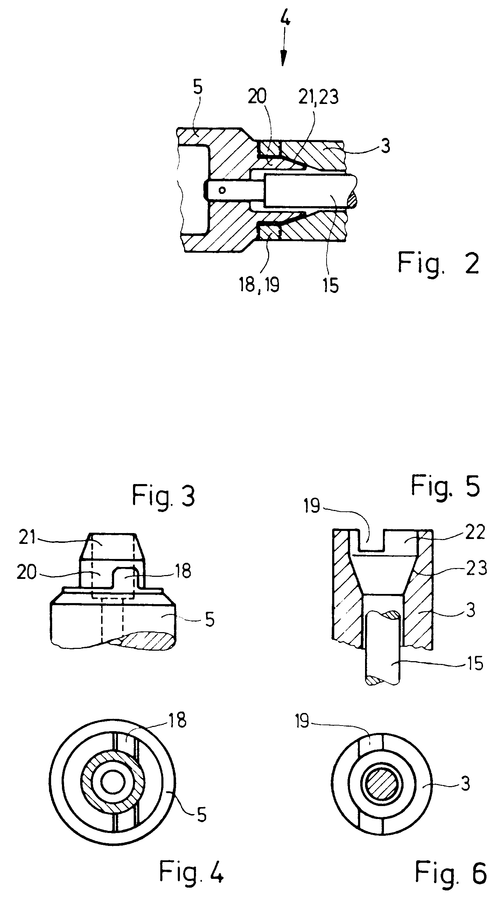

In Fig. 2 sind beide Hälften 3 und 5 der Kupplung 4 in einem eingekuppelten oder verbundenen Zustand gezeigt.

Fig. 3 zeigt die eine Kupplungshälfte 5 mit einem exzentrisch versetzten Querstück 18. Dieses Querstück befindet sich an der Stirnseite der einen Kupplungshälfte 5 und paßt in eine entsprechende, in der anderen Kupplungshälfte 3 geformten Nut 19 (Fig. 5 und 6). Durch die exzentrische Anordnung des Querstücks 18 und der Nut 19 ist gewährleistet, daß beide Kupplungshälften 3 und 5 nur in einer vorbestimmten Position eingekuppelt werden können.

Außer den an der jeweiligen Stirnseite der beiden Kupplungshälften 3 und 5 vorgesehenen Kupplungselementen ist auch eine Zentrierbüchse 20 mit einer kegelförmigen Zentrierfläche 21 auf der einen Kupplungshälfte 5 vorgesehen. Die andere Kupplungshälfte 3 ist mit einer passenden Zentrierbohrung 22 versehen, welche eine kegelförmige Zentrierfläche 23 bildet, die mit der Zentrierfläche 21 der Zentrierbüchse 20 zusammenwirkt, so daß in einem eingekuppelten Zustand beide Kupplungshälften 3 und 5 gegeneinander zentriert sind. Somit ermöglicht diese Kupplung ein exaktes Einkuppeln in nur einer Drehposition der Kupplungshälften 3 und 5 und gewährleistet durch die exakte Zentrierung der beiden Kupplungshälften 3 und 5 im eingekuppelten Zustand eine spiel- und schwingungsfreie Kraftübertragung. Ferner bewirkt diese Kupplung eine ausfallsichere Entkupplung der Kupplungshälften 3 und 5.

### LISTE DER BEZUGSZEICHEN

- 1: Schraubenrad
- 2: Schraubenrad
- 3: Kupplungshälfte
- 4: Kupplung
- 5: Kupplungshälfte
- 6: Paßfeder
- 7: Wälzlager
- 8: Gehäuse
- 9: Schiebekeilverbindung
- 10: Büchse
- 11: Zahnrad
- 12: Achszapfen
- 13: Wälzlager
- 14: Gestellteil
- 15: Zapfen
- 16: Drehverbindung
- 17: Stellmittel
- 18: Querstück
- 19: Nut
- 20: Zentrierbüchse
- 21: Zentrierfläche
- 22: Zentrierbohrung
- 23: Zentrierfläche

## Patentansprüche

1. Antrieb für eine Rotationsdruckmaschine mit einer Kupplung zum Kuppeln von zwei Getrieben in einer vorbestimmten Phasenlage, wobei
die Kupplung (4) aus zwei Kupplungshälften (3, 5) besteht, dadurch gekennzeichnet, daß an der jeweiligen Stirnseite der Kupplungshälften ein ergänzendes Kupplungselement zur Längsachse exzentrisch versetzt angeordnet ist, wobei die beiden genannten Kupplungselemente mit jeweiligen miteinander verbindbaren, radial positionierten Zentrierflächen (21, 23) versehen sind und die genannten Zentrierflächen aus einem gekuppelten Zustand, in welchem die genannten Zentrierflächen miteinander verbunden sind, in einen entkuppelten Zustand, in welchem die genannten Zentrierflächen ausfallsicher entkuppelt und die beiden Getriebe vollkommen voneinander getrennt sind, kuppelbar sind.

2. Antrieb nach Anspruch 1,
**dadurch gekennzeichnet**,
daß das genannte Kupplungselement der einen genannten Kupplungshälfte (5) als ein exzentrisch zur Längsachse angeordnetes Querstück (18) und das genannte Kupplungselement der anderen genannten Kupplungshälfte (3) als eine darin geformte, zu dem Querstück passende Nut (19) ausgebildet sind, und daß die genannte Zentrierfläche (21) der genannten einen Kupplungshälfte als kegelförmige Zentrierbüchse (20) geformt ist und in der genannten Zentrierfläche (23) der anderen Kupplungshälfte eine kegelförmige Zentrierbohrung (22) geformt ist.

## Claims

1. Drive for a rotary printing machine, having a clutch for coupling two gear mechanisms in a predetermined phase position, the clutch (4) consisting of two clutch halves (3, 5), characterized in that a complementary clutch element is arranged, offset eccentrically relative to the longitudinal axis, on the respective end face of the clutch halves, the two said clutch elements being provided with respective radially positioned centring surfaces (21, 23) which can be connected to one another, and it being possible for the said centring surfaces to be coupled from a coupled state, in which the said centring surfaces are connected to one another, into an uncoupled state in which the said centring surfaces are uncoupled in a failsafe manner and the two gear mechanisms are completely separated from one another.

2. Drive according to Claim 1, characterized in that the said clutch element of the one said clutch half (5) is designed as a cross-piece (18) arranged eccentrically relative to the longitudinal axis and the said clutch element of the other said clutch half (3) is designed as a groove (19) which is moulded therein and matches the cross-piece, and in that the said centring surface (21) of the said one clutch half is formed as a conical centring bush (20), and a conical centring bore (22) is formed in the said centring surface (23) of the other clutch half.

## Revendications

1. Dispositif d'entraînement pour une presse rotative comportant un accouplement pour accoupler deux transmissions dans une position de phase prédéterminée, l'accouplement (4) étant constitué de deux moitiés d'accouplement (3,5), caractérisé en ce qu'un élément d'accouplement complémentaire est disposé sur la face frontale respective des moitiés d'accouplement, en étant décalé d'une manière excentrée par rapport à l'axe longitudinal, lesdits deux éléments d'accouplement étant équipés de surfaces respectives de centrage (21,23), qui peuvent être reliées entre elles et sont positionnées radialement, tandis que lesdites surfaces de centrage peuvent être commutées d'un état accouplé, dans lequel lesdites surfaces de centrage sont reliées entre elles, à un état désaccouplé, dans lequel lesdites surfaces de centrage sont désaccouplées d'une manière intrinsèquement sûre et les deux transmissions sont complètement séparées l'une de l'autre.

2. Dispositif d'entraînement selon la revendication 1, caractérisé en ce
que ledit élément d'accouplement de l'une desdites moitiés d'accouplement (5) est agencé sous la forme d'une pièce transversale (18) montée de façon excentrée par rapport à l'axe longitudinal et que ledit élément d'accouplement de ladite autre moitié d'accouplement (3) est agencé sous la forme d'une rainure (19) qui est formée en elle et est adaptée à la pièce transversale, et que ladite surface de centrage (21) de ladite première moitié d'accouplement est agencée sous la forme d'une douille de centrage de forme conique (20) et qu'un perçage conique de centrage (22) est formé dans ladite surface de centrage (23) de l'autre moitié d'accouplement.
